# EUROPÄISCHE PATENTSCHRIFT

(11) **EP 4 330 095 B1**
(45) Veröffentlichungstag und Bekanntmachung des Hinweises auf die Patenterteilung: **25.03.2026**
(21) Anmeldenummer: 22724671.7
(22) Anmeldetag: 21.04.2022
(51) Int. Cl.: B60T 8/88

(54) **DIAGNOSEVERFAHREN UND BREMSSYSTEM MIT EINER EINHEIT ZUM DURCHFÜHREN DES DIAGNOSEVERFAHRENS**
DIAGNOSTIC METHOD AND BRAKING SYSTEM COMPRISING A UNIT FOR PERFORMING THE DIAGNOSTIC METHOD
PROCÉDÉ DE DIAGNOSTIC ET SYSTÈME DE FREINAGE COMPRENANT UNE UNITÉ POUR LA MISE EN OEUVRE DU PROCÉDÉ DE DIAGNOSTIC

(30) Priorität: 28.04.2021 DE 102021110832
(43) Veröffentlichungstag der Anmeldung: 06.03.2024
(73) Patentinhaber: ZF CV Systems Global GmbH, 3006 Bern (CH)
(72) Erfinder: VAN THIEL, Julian, 30938 Grossburgwedel (DE)
(74) Vertreter: Rabe, Dirk-Heinrich
(86) Internationale Anmeldenummer: PCT/EP2022/060565
(87) Internationale Veröffentlichungsnummer: WO 2022/228997

(56) Entgegenhaltungen:
- CN-A- 110 520 341
- US-A1- 2019 299 962
- US-A1- 2020 134 939
- US-B2- 9 207 135

## Beschreibung

Die Erfindung betrifft ein Diagnoseverfahren zum Durchführen einer Eigendiagnose eines elektronisch steuerbaren pneumatischen Bremssystems für ein Nutzfahrzeug. Die Erfindung betrifft ferner ein elektronisch steuerbares pneumatisches Bremssystem für ein Nutzfahrzeug sowie ein Computerprogramm.

Ein Diagnoseverfahren der eingangs genannten Art wird vorzugsweise für elektronisch steuerbare pneumatische Bremssysteme von teil- oder vollautonom fahrenden Nutzfahrzeugen eingesetzt. Insbesondere für Automatisierungsgrade nach SAE Level 2 bis 5, insbesondere 4 und 5, ist ein solches Diagnoseverfahren zur Durchführung einer Eigendiagnose sinnvoll und bevorzugt. Heutige Bremssysteme verlassen sich bei verschiedenen in ihrer Häufigkeit sehr selten auftretenden Fehlern auf die Diagnosefähigkeit und die Fehlerreaktion des Fahrers. Betroffen sind vor allem mechanische bzw. pneumatische Fehler, deren Einwirkung auf das System unter Umständen kein weiterer direkter Sensor zur Fehlererkennung nachgeschaltet ist. Ist aber bei einem teilweise oder vollständig autonom fahrenden Fahrzeug kein Fahrer vorgesehen, bedarf es weiterer Mittel, solche Fehler zu erkennen.

Aus DE 10 2018 222 677 A1 ist ein Verfahren bekannt, welches beim sogenannten Platooning von Nutzfahrzeugen eingesetzt werden kann. Das Verfahren betrifft den Betrieb eines Fahrzeugs, das dazu eingerichtet ist, zumindest zeitweise autonom zu fahren, wobei, während das Fahrzeug in einem ersten Fahrmodus, in dem das Fahrzeug autonom fährt, betrieben wird, ermittelt wird, ob ein oder mehrere Umschaltbedingungen erfüllt sind. Für den Fall, dass eine solche Umschaltbedingung erfüllt ist, wird das Fahrzeug in einen zweiten Fahrmodus geschaltet, in dem das Fahrzeug gelotst wird. Umschaltbedingungen können insbesondere ein schwieriger Streckenverlauf, eine Baustelle oder anders autonom nur schwer zu meisternde Situationen sein. In diesem Fall wird dann der zweite Fahrmodus eingeschaltet, in dem das Fahrzeug beispielsweise durch den vorausfahrenden PKW gelotst wird.

DE 10 2017 130 549 A1 beschreibt ein Verfahren zur Eigendiagnose. Dabei geht dieses Dokument davon aus, dass Diagnoseverfahren zum Erkennen von Fehlerzuständen bekannt sind, bei denen aber das Fahrzeug unter Einhaltung bestimmter Randbedingungen fahren muss, um Diagnosedaten zu sammeln. Dies wird als nachteilig angesehen, da in die Standardbetriebsart eingegriffen werden muss und Beschränkungen dabei dem Fahrer auferlegt werden. In DE 10 2017 130 549 A1 wird versucht, dies dadurch zu lösen, dass eine eigene Diagnosebetriebsart vorgesehen ist, in der dann die Eigendiagnose durchgeführt wird. Hierdurch wird zum Beispiel ein bestimmter Betrieb, der vom Fahrer gewünscht ist, nicht durch eine Unterbrechung aufgrund von Diagnose gestört.

Darüber hinaus offenbart DE 10 2013 007 857 A1 ein Verfahren zum Betrieb eines Bremssystems in einem ein zur vollautomatischen, unabhängigen Fahrzeugführung ausgebildeten Fahrerassistenzsystem aufweisenden Kraftfahrzeug. Die hierin beschriebene Idee liegt darin, einen Fail-safe-Status zu erreichen. Hierbei wird ein Aktionsplan ermittelt, der dann genutzt werden soll, wenn ein Fehler auftritt. Der Aktionsplan wird in Abhängigkeit von Betriebsparametern, umfassend wenigstens einen den aktuellen Betriebszustand des Kraftfahrzeugs beschreibenden Egoparameter und/oder wenigstens einen die Umgebung des Kraftfahrzeugs beschreibenden Umgebungsparameter, ermittelt und ständig aktualisiert. Die grundlegende Idee der DE 10 2013 007 857 A1 ist es also, einen sicheren Zustand zu definieren, beispielsweise den Stillstand des Kraftfahrzeugs auf der aktuell befahrenen Fahrspur oder einer benachbarten Fahrspur, beispielsweise einem Standstreifen. Ausgehend vom aktuellen Betriebszustand des Kraftfahrzeugs, beschrieben durch die Betriebsparameter, kann mithin ein Bremsmaßnahmen umfassender Aktionsplan ermittelt werden, der diesen sicheren Zustand herbeiführt. Es wird also während des Fehlerfahrbetriebs ein Bremsprofil als Aktionsplan erzeugt und ständig aktuell gehalten, wobei dann im Fehlerfall der Aktionsplan zur Anwendung kommt. Damit setzt die Lehre der DE 10 2013 007 857 A1 nicht bei der Fehlererkennung, sondern bei einem Zustand an, wenn bereits ein Fehler eingetreten ist und das Fahrzeug in einen sicheren Zustand überführt werden soll. Eine proaktive Erkennung von Fehlern und Behebung dieser Fehler wird hier nicht weiter thematisiert.

Aus DE 10 2017 207 476 A1 ist ein Verfahren zur Überwachung einer Reibbremse bekannt. Hierzu wird die Bremsanlage kurzzeitig per Testbremsung aktiviert, wenn das Fahrzeug in einem bekannten Fahrzustand ist. Durch Auswerten von Beschleunigungswerten kann dann auf den Zustand der Reibbremse geschlossen werden. Hierzu werden ermittelte Beschleunigungswerte mit bekannten Werten des gebremsten Fahrzeugs verglichen. Nicht offenbart ist allerdings, wie solche Werte ermittelt, wie diese bereitgestellt, gespeichert oder benutzt werden sollen, und auch nicht, wie der Vergleich im Detail ausgeführt wird.

Ähnliche Verfahren zum Durchführen einer Testbremsung sind aus EP 0 733 531 B1 und EP 0 733 532 B1 bekannt. Erstgenannte offenbart eine Testbremsung für die Ermittlung und Einstellung der Verteilung der Bremsungsenergie auf die Bremsen nach Maßgabe der Ansprechenergie. Letztgenannte offenbart ein Verfahren zur Vereinfachung der Ermittlung des Ansprechdrucks der Bremsen eines Fahrzeugs. In der ersten Ausgestaltung sind Testbremsungen mit geringem Bremsdruck vorgesehen, wobei der Bremsdruck so lange variiert wird, bis sich gerade eine Veränderung der Fahrzeugverzögerung zeigt. In der zweiten Ausgestaltung ist vorgesehen, nach einer Betriebsbremsung die Aufrechterhaltung des Bremsdrucks der zu untersuchenden Bremse mit variierendem Bremsdruck durchzuführen, bis diese eine Änderung der Fahrzeugverzögerung hervorruft.

Die DE102017003784A1 betrifft ein Verfahren zum Einlernen von Schaltparametern eines Magnetsteuerventils in einem Bremssystem eines Fahrzeuges mit mindestens den folgenden Schritten:- Festlegen einer Fahrzeug-Test-Beschleunigung;- Ermitteln von mindestens zwei Test-Pulsfolgen, wobei die Test-Pulsfolgen jeweils in Abhängigkeit der festgelegten Fahrzeug-Test-Beschleunigung sowie in Abhängigkeit von Schaltparameter-Ausgangswerten für das jeweilige Magnetsteuerventil ermittelt werden und die Test-Pulsfolgen Ansteuerpulse und Nicht-Ansteuerpulse aufweisen, wobei während eines Ansteuerpulses eine Aktivierung und während eines Nicht-Ansteuerpulses eine Deaktivierung des jeweiligen Magnetsteuerventils stattfindet,- Ansteuern des Magnetsteuerventils mit den mindestens zwei Test-Pulsfolgen zum Bewirken mindestens zweier Testbremsungen, wobei durch die jeweilige Test-Pulsfolge eine Veränderung eines Bremsdruckes an einer Betriebsbremse des Bremssystems derartig bewirkt wird, dass sich eine Änderung der Fahrdynamik des Fahrzeuges ergibt,- Ermitteln von Fahrdynamik-Änderungsgrößen zum Erfassen der Änderung der Fahrdynamik des Fahrzeuges infolge der Ansteuerung mit der jeweiligen Test-Pulsfolge, und- Anpassen der Schaltparameter-Ausgangswerte für das Magnetsteuerventil in Abhängigkeit der Fahrdynamik-Änderungsgrößen zum Einlernen der Schaltparameter des Magnetsteuerventils.

Neben den zuvor beschriebenen Systemen, die einen Fail-safe-Betrieb, einen gelotsten Betrieb oder dergleichen ermöglichen oder einen Status des Bremssystems, wie beispielsweise den Zustand einer Reibbremse, ermitteln können, besteht weiterhin Bedarf daran, ein Verfahren, ein Bremssystem und ein Computerprogramm der eingangs genannten Art bereitzustellen, die eine Fehlererkennung auf einfache und sichere Weise ermöglichen. Insbesondere soll ein solches Verfahren auch Fertigungs-, Montage oder altersbedingte Varianzen in dem Bremssystem berücksichtigen können. Es hat sich beispielsweise gezeigt, dass starre Grenzwerte, die entwicklungsseitig vorgegeben werden, nicht in jedem Fall geeignet sind, als Grenzwerte für Fehler des Bremssystems zu dienen. Je nach Montage, Fertigungstoleranzen oder Verschleiß können Reaktionen des Bremssystems leicht variieren, auch wenn sie nach wie vor innerhalb zulässiger Toleranzen sind. Zudem sollen auch Fehler erkannt werden, die nicht unmittelbar durch einen Sensor erfasst werden können oder durch einen Funktionstest ermittelbar sind.

Die Erfindung löst die Aufgabe bei einem Diagnoseverfahren der eingangs genannten Art mit den Merkmalen des Anspruchs 1, nämlich insbesondere mit den Schritten: Empfangen eines Lernsignals an dem Bremssystem; in Antwort auf den Empfang des Lernsignals: Versetzen des Bremssystems in einen Lernmodus und Ausführen der Schritte: Ausführen einer vorbestimmten ersten Aktivität des Bremssystems bei stehendem oder fahrendem Nutzfahrzeug; Erfassen mittels einer Sensoranordnung einer ersten Lern-Systemreaktion des Bremssystems und Antwort auf das Ausführen der ersten Aktivität; und Speichern der erfassten ersten Lern-Systemreaktion als erste Soll-Systemreaktion in einer Speichereinheit.

Die Erfindung macht sich die Erkenntnis zunutze, dass eine Systemreaktion in einem definierten Zustand in Antwort auf eine definierte Reaktion erfasst und gespeichert werden kann, um dann als Referenz für einen folgenden Test zu dienen. Hierdurch ist das Diagnoseverfahren nicht darauf beschränkt, dass unmittelbar ein Sensor für ein zu testendes Modul, eine Funktion oder ein Teilsystem bereitgestellt ist, sondern die Überprüfung kann anhand der Systemreaktion erfolgen. Auch werden bei Erfassen und Speichern einer Systemreaktion, die in Antwort auf das Ausführen einer vorbestimmten ersten Aktivität erfolgt, systemimmanente Eigenschaften mitberücksichtigt. Beispielsweise hat jedes pneumatische Bremssystem gewisse Leckagen, die die Funktion nicht negativ beeinflussen, aber die Systemreaktion in gewissen Bereichen beeinflussen können. Derartige Leckagen, die sich bei der Montage des Bremssystems nicht vollständig vermeiden lassen, werden bei dem Diagnoseverfahren gemäß der vorliegenden Erfindung immanent mitberücksichtigt.

Der Lernmodus wird vorzugsweise nur dann eingeschaltet, wenn das Nutzfahrzeug in einem definierten Zustand ist, vorzugsweise einem fehlerfreien Zustand. Beispielsweise kann das Lernsignal im Anschluss an eine Werksabnahme, eine Reparatur des Nutzfahrzeugs, eine Wartung oder dergleichen bereitgestellt werden. Es kann vorgesehen sein, dass das Lernsignal durch den Fahrer des Nutzfahrzeugs bereitgestellt werden kann, beispielsweise durch Betätigen eines Schalters, oder drahtlos über einen entfernten Sender empfangen wird. Es kann auch vorgesehen sein, dass das Lernsignal nur von dem Hersteller des Nutzfahrzeugs bereitgestellt werden darf. In einer weiteren Variante kann vorgesehen sein, dass das Lernsignal periodisch, im Rahmen einer Abfahrtkontrolle, oder aufgrund einer Routine in einer übergeordneten Steuereinheit, beispielsweise einer Steuereinheit für autonomes Fahren des Nutzfahrzeugs, ausgelöst und/oder bereitgestellt wird.

Die Sensoranordnung, die zum Erfassen der ersten Lern-Systemreaktion des Bremssystems in Antwort auf das Ausführen der ersten Aktivität genutzt wird, ist vorzugsweise eine Sensoranordnung, die bereits im Bremssystem vorhanden ist, wie insbesondere im Bremssystem verbaute und vorhandene Sensoren, insbesondere Drucksensoren, Raddrehzahlsensoren, Verschleißsensoren und dergleichen.

Die erste Aktivität kann eine Aktivität sein, die bei stehendem Nutzfahrzeug ausgeführt wird, oder eine Aktivität, die bei fahrendem Nutzfahrzeug ausgeführt wird. Aktivitäten, die bei fahrendem Fahrzeug ausgeführt werden, umfassen insbesondere Aktivitäten, die bei einer sehr geringen oder geringen Geschwindigkeit ausgeführt werden. Typischerweise reichen für die Erkennung der meisten Fehler auch Aktivitäten bei stehendem Fahrzeug aus. Solche Aktivitäten können beispielsweise dazu dienen, Leckagen an Schläuchen zu erkennen. Aktivitäten, die bei fahrendem Fahrzeug ausgeführt werden müssen, sind insbesondere solche, die eine Verzögerung des Fahrzeugs erfassen müssen, um einen Fehler zu erkennen. Solange es zur Erkennung eines Fehlers auf Raddrehzahlen nicht ankommt, reicht in der Regel eine Aktivität aus, die bei stehendem Fahrzeug durchgeführt werden kann und soll, wodurch die Sicherheit erhöht werden kann.

Erfindungsgemäß umfasst das Diagnoseverfahren die Schritte: Durchführen einer ersten Systemdiagnose mit den Schritten: Ausführen der vorbestimmten ersten Aktivität des Bremssystems bei stehendem oder fahrendem Fahrzeug; Erfassen mittels der Sensoranordnung einer ersten Diagnose-Systemreaktion des Bremssystems in Antwort auf das Ausführen der ersten Aktivität; Vergleichen der ersten Diagnose-Systemreaktion in einer Vergleichereinheit mit der vorgespeicherten ersten Soll-Systemreaktion; und bei einer Abweichung zwischen der ersten Soll-Systemreaktion und der ersten Diagnose-Systemreaktion: Ausgeben eines ersten Fehlersignals. Es wird also zum Diagnostizieren des Bremssystems dieselbe erste Aktivität durchgeführt, die auch beim Erfassen der Lern-Systemreaktion durchgeführt wurde. Auf diese Weise kann eine Abweichung zwischen der Lern-Systemreaktion und der tatsächlich auftretenden Systemreaktion ermittelt werden. Vorzugsweise werden für die Lern-Systemreaktion, die der Soll-Systemreaktion entspricht, Grenzwerte vorgegeben. Diese Grenzwerte können automatisch vom Bremssystem, der Vergleichereinheit oder dergleichen vorgegeben und angewandt werden. Die Grenzwerte können abhängig von einem oder mehreren Parametern angewandt werden.

Auf diese Weise ist es möglich, ein gelerntes Systemverhalten mit einem tatsächlich auftretenden Systemverhalten zu vergleichen und basierend auf diesem Vergleich zu erkennen, ob ein Fehler in dem Bremssystem vorliegt.

In einer bevorzugten Weiterbildung umfasst das Ausgeben des ersten Fehlersignals: wenigstens teilweises Verhindern eines automatisierten Betriebs des Nutzfahrzeugs. Gemäß dieser Ausführungsform kann beispielsweise vorgesehen sein, dass zum Autorisieren des wenigstens teilweisen, vorzugsweise vollständigen automatisierten Betriebs des Nutzfahrzeugs zunächst die Durchführung des Diagnoseverfahrens, bzw. wenigstens Schritte davon, notwendig ist. Beispielsweise kann vor Aktivierung des automatisierten Betriebs des Nutzfahrzeugs der Vergleich zwischen der Soll-Systemreaktion und der Diagnose-Systemreaktion durchgeführt werden. Wenn kein Fehlersignal ausgegeben wird, kann der automatisierte Betrieb des Nutzfahrzeugs durchgeführt werden, wenn allerdings das Fehlersignal ausgegeben wird, wird die Ausführung des automatisierten Betriebs, teilweisen oder vollständigen automatisierten Betriebs, wenigstens teilweise oder vollständig verhindert. In diesem Zustand kann dann vorgesehen sein, dass das Nutzfahrzeug nur noch durch den Fahrer selbst steuerbar ist, gegebenenfalls unter Verwendung eines eingeschränkten automatisierten Betriebs, in welchem noch gewisse Systeme oder Teilsysteme genutzt werden können. Das heißt, auch bei Auftreten des Fehlers ist nicht zwingend der sofortige Stillstand des Fahrzeugs bzw. das Überführen des Fahrzeugs in einen sicheren Zustand notwendig. Vielmehr kann vorgesehen sein, dass das Nutzfahrzeug nach wie vor betrieben werden kann, allerdings nicht mehr vollständig automatisiert. In diesem Fall wird das Fehlersignal vorzugsweise über einen Fahrzeug-BUS und insbesondere an eine Einheit für autonomes Fahren, die dem Bremssystem vorzugsweise übergeordnet ist, ausgegeben.

In einer weiteren Ausgestaltung des Diagnoseverfahrens kann vorgesehen sein, dass die vorbestimmte erste Aktivität nur ein erstes Teilsystem des Bremssystems betrifft. In diesem Fall ist es möglich, aufgrund der ersten Aktivität das erste Teilsystem zu testen und einen Fehler im ersten Teilsystem zu diagnostizieren. Für weitere Teilsysteme sind bevorzugt weitere Aktivitäten durchzuführen. Dies ermöglicht auch einen selektiven oder eingeschränkten Test, bezogen auf das oder diejenigen Teilsysteme, die der Diagnose unterzogen werden sollen. Dies ist besonders dann vorteilhaft, wenn beispielsweise nur eines oder mehrere einer Vielzahl von Teilsystemen gewartet wurde, oder nur dieses zum automatisierten Betrieb notwendig ist und so der Diagnose unterzogen werden soll.

Vorzugsweise umfasst das Diagnoseverfahren ferner in dem Lernmodus die Schritte: Ausführen einer vorbestimmten zweiten Aktivität des Bremssystems bei stehendem oder fahrendem Nutzfahrzeug; Erfassen mittels einer weiteren oder der Sensoranordnung einer zweiten Lern-Systemreaktion des Bremssystems in Antwort auf das Ausführen der zweiten Aktivität; und Speichern der erfassten zweiten Lern-Systemreaktion als zweite Soll-Systemreaktion in einer weiteren oder der Speichereinheit. Die vorbestimmte zweite Aktivität kann sich auf ein weiteres Teilsystem des Bremssystems beziehen, oder einen anderen Aspekt des Bremssystems betreffen. Sie kann sich aber auch auf dasselbe Teilsystem wie die erste Aktivität beziehen, aber eine andere Funktionalität betreffen. Es soll verstanden werden, dass auch dritte, vierte, fünfte usw. Aktivitäten durchgeführt werden können, um das Bremssystem möglichst vollständig zu diagnostizieren. In entsprechender Weise werden dann auch dritte, vierte, fünfte usw. Lern-Systemreaktionen als dritte, vierte, fünfte usw. Soll-Systemreaktionen gespeichert. Vorzugsweise werden alle Soll-Systemreaktionen in derselben Speichereinheit gespeichert.

Die Sensoranordnung kann sich je nach Aktivität unterscheiden. Beispielsweise könnte eine erste Aktivität sein, das Aussteuern eines Bremsdrucks an einer Vorderachse, während eine zweite Aktivität das Aussteuern eines Bremsdrucks an einer Hinterachse ist. Insofern würde eine Sensoranordnung zum Ermitteln der ersten Lern-Systemreaktion Sensoren an der Vorderachse einschließen, während eine Sensoranordnung zum Ermitteln der zweiten Lern-Systemreaktion Sensoren an der Hinterachse einschließen müsste. Es kann auch vorgesehen sein, dass sämtliche Reaktionen von Sensoren eines Bremssystems unabhängig von der Art der Aktivität aufgezeichnet werden. Auf diese Weise kann ein vollständiges Bild über das gesamte Bremssystem erhalten werden. Zur Verringerung des Speicher- und Rechenbedarfs allerdings ist es bevorzugt, nur diejenigen Sensoren im Rahmen der Erfassung der Lern-Systemreaktionen zu aktivieren, welche typischerweise einen Bezug zu der Systemreaktion haben.

Für den Fall, dass im Lernmodus eine zweite Aktivität ausgeführt wird, umfasst das Verfahren vorzugsweise auch: Durchführen einer zweiten Systemdiagnose mit den Schritten: Ausführen der vorbestimmten zweiten Aktivität des Bremssystems bei stehendem oder fahrendem Fahrzeug: Erfassen mittels der oder der weiteren Sensoranordnung einer zweiten Diagnose-Systemreaktion des Bremssystems in Antwort auf das Ausführen der zweiten Aktivität; Vergleichen der zweiten Diagnose-Systemreaktion in einer weiteren oder der Vergleichereinheit mit der vorgespeicherten zweiten Soll-Systemreaktion; und bei Abweichung zwischen der zweiten Soll-Systemreaktion und der erfassten zweiten Diagnose-Systemreaktion: Ausgeben eines zweiten Fehlersignals.

In Bezug auf das Durchführen des Vergleichens sowie das Fehlersignal und auch die Sensoranordnung gilt das oben bereits zur ersten Systemdiagnose Gesagte. Es kann aber auch vorgesehen sein, dass das zweite Fehlersignal eine andere Folge hat als das erste Fehlersignal. Dies kann insbesondere abhängig davon sein, welches System bzw. Teilsystem des Bremssystems mittels der ersten bzw. zweiten Aktivität angesprochen wird. Handelt es sich beispielsweise um funktionskritische Systeme oder sicherheitsrelevante Systeme, sollte das Ausgeben eines Fehlersignals auch das Verhindern eines weiteren Betriebs des Nutzfahrzeugs nach sich ziehen. Handelt es sich um Systeme, die nur den autonomen Betrieb einschränken, sollte das Fehlersignal das Verhindern des autonomen Betriebs nach sich ziehen. In anderen Fällen, wenn beispielsweise Komfortsysteme nicht oder nicht richtig funktionieren, kann vorgesehen sein, dass das Nutzfahrzeug nach wie vor oder unter Umständen mit gewissen Einschränkungen betrieben werden kann.

Gemäß einer weiteren bevorzugten Ausführungsform ist vorgesehen, dass der Schritt des Vergleichens in der Vergleichereinheit unter Berücksichtigung wenigstens eines Parameters ausgeführt wird, der ausgewählt ist aus: Umgebungstemperatur, Vorratsdruck, insbesondere statischer Vorratsdruck vor Beginn des Diagnoseverfahrens oder dynamischer Vorratsdruckverlauf während des Diagnoseverfahrens, elektrisches Versorgungsspannungsniveau in dem Bremssystem oder einem oder mehreren Teilen von diesem, elektrischer Stromverbrauch in dem Bremssystem oder einem oder mehreren Teilen von diesem.

Die Parameter können Einfluss darauf haben, wie die Systemreaktion im Detail ausfällt. Beispielsweise ist bei einem geringeren Vorratsdruck auch ein geringerer Bremsdruck zu erwarten, da dieser abhängig ist von dem Vorratsdruck. Ein geringerer Bremsdruck muss daher nicht zwangsläufig auf eine Leckage einer Leitung zwischen einem Achsmodulator und einem Bremsaktuator hinweisen, sondern kann auch aufgrund eines etwas geringeren Vorratsdrucks zustande kommen. Durch Berücksichtigung eines oder mehrerer der genannten Parameter kann also Zuverlässigkeit und Robustheit der Fehlererkennung verbessert werden. Vorzugsweise werden die Parameter auch beim Ermitteln der Soll-Systemreaktion erfasst und gespeichert. Vorzugsweise werden die Parameter beim Ermitteln der Diagnose-Systemreaktion ermittelt und gespeichert. Die Vergleichereinheit kann Algorithmen aufweisen, die die Berücksichtigung des oder der Parameter beim Vergleichen implementieren. Alternativ wird die Diagnose-Systemreaktion in einer normierten und/oder parameterkompensierten Form verfügbar gemacht und vorzugsweise gespeichert, vorzugsweise wenigstens in der Vergleichereinheit. Hierbei können ein oder mehrere der oben genannten Parameter verwendet werden. Es kann auch festgestellt werden, dass einer oder mehrere der Parameter nicht in einem sinnvollen Bereich sind, um das Verfahren durchzuführen. Ist beispielsweise einer oder mehrere der Parameter außerhalb eines Bereichs von etwa 20% unter- oder oberhalb des nominalen Werts, kann es nicht sinnvoll sein, das Diagnoseverfahren durchzuführen. In diesem Fall kann abgebrochen, wiederholt oder zu einem späteren Zeitpunkt geplant durchgeführt werden.

Vorzugsweise ist die vorbestimmte erste Aktivität ein Sprungsignal an einem Bremskraftmodulator. Eine solche Aktivität ist ein klar definierter Vorgang. Beispielsweise wird hierzu kurzzeitig, vorzugsweise für einen Zeitraum kleiner 1 Sekunde, vorzugsweise für einen Zeitraum mehrerer Millisekunden, ein Bremssignal ausgesteuert, welches für diesen Zeitraum eine maximale Bremskraft anfordert. Dies kann radweise, achsenweise, oder für das gesamte Bremssystem gelten. Andere vorbestimmte erste Aktivitäten können auch das Ansteuern bestimmter, gegebenenfalls einzelner, elektromagnetischer Ventile umfassen, wie beispielsweise eines ABS-Ventils, Aktivieren von Feststellbremsen, Aktivieren einer Luftfederung, eines Kompressors, eines Anhängersteuerventils, einer elektrischen Lenkung und dergleichen. Aktivitäten, die bei fahrendem Fahrzeug ausgeführt werden können, sind insbesondere das Betätigen einer Reibbremse, um so einen Zustand der Bremse zu erfassen. Die Diagnose-Systemreaktion ist in diesem Fall eine Fahrzeugverzögerung. Hierdurch kann beispielsweise ein verglaster oder verschlissener Bremsklotz ermittelt werden.

Vorzugsweise umfasst die Sensoranordnung wenigstens einen Drucksensor. Der Drucksensor ist vorzugsweise ein in einem Modulator des Bremssystems vorgesehener Drucksensor. Insofern kann das Diagnoseverfahren Systeme und Teilsysteme nutzen, die bereits in herkömmlichen Bremssystemen vorhanden sind.

Zusätzlich oder alternativ kann die Sensoranordnung eine Messeinheit zur Erfassung eines Volumen- oder Massenstroms und/oder einen Geräuschsensor umfassen. Eine Messeinheit zur Erfassung eines Volumen- oder Massenstroms ist bevorzugt, um an einer bestimmten Stelle des Systems den Massen- oder Volumenstrom an Druckluft zu ermitteln. Beispielsweise gibt es Fälle, in denen trotz konstant bleibenden Drucks eine Leckage vorliegt, die entweichende Druckluft aber vom Vorrat nachgeliefert und/oder vom Kompressor nachgeliefert wird. In diesem Fall herrscht zwar ein Volumenstrom an Druckluft, aber ein Drucksensor ermittelt keinen Druckabfall. Durch Vorsehen einer Messeinheit zum Erfassen eines Volumen- oder Massenstroms kann auch eine solche Leckage erkannt werden. Ein zusätzlicher Geräuschsensor kann das Messergebnis nur verbessern. Liegt eine Leckage vor, ist dies meistens auch mit einem akustischen Geräusch verbunden. Typischerweise wird eine solche Leckage von einem Fahrer des Nutzfahrzeugs im Rahmen einer Abfahrkontrolle erkannt. Der Fahrer geht um das Nutzfahrzeug herum und aufgrund seiner Erfahrung erkennt er, wann eine Leckage vorliegt. Bei rein autonomen Fahrzeugen ist es bevorzugt, eine solche Prüfung automatisch durchzuführen. Zu diesem Zweck wird der Geräuschsensor eingesetzt. Es können auch mehrere Geräuschsensoren an verschiedenen Positionen im Bremssystem untergebracht sein.

Zusätzlich oder alternativ kann die Sensoranordnung eine Einheit zur olfaktorischen Sensierung (Geruchssensor) und/oder Gassensor zur Erfassung eines Duftstoffs, Botenstoffs und/oder Gases umfasst. Auf diese Weise kann ebenfalls eine Leckage in dem Bremssystem erkannt werden. Es kann zu diesem Zweck der Druckluft ein bestimmter vorzugsweise in der Natur und/oder im Fahrzeug nicht vorkommender Geruchs- oder Botenstoff oder ein bestimmtes Gas beigemischt werden. Dies kann nur für die Zwecke des Diagnoseverfahrens oder dauerhaft geschehen. Der Geruchssensor bzw. Gassensor stellt dann ein entsprechendes Signal bereit, welches wiederum im Rahmen des Diagnoseverfahrens weiter ausgewertet und/oder verarbeitet werden kann.

Für den Fall, dass die erste Aktivität das Betätigen einer oder mehrerer Reibbremsen umfasst, wird im Rahmen der Sensoreinheit vorzugsweise auch ein Verzögerungssensor zum Ermitteln einer Verzögerung des Nutzfahrzeugs eingesetzt. Ein solcher Verzögerungssensor kann beispielsweise als Steuerungssensor oder Gyroskop ausgebildet sein und dient dazu, die bewirkte Fahrzeugverzögerung zu erfassen. Hierbei werden vorzugsweise weitere Parameter berücksichtigt, wie insbesondere Beladung des Fahrzeugs, Art der Reifen, Straßenverhältnisse und dergleichen. Alternativ oder zusätzlich kann auch ein Gassensor 207 vorgesehen sein. Diese Einheit 209 kann Duftstoffe 301, Botenstoffe 302 oder Gase 303 ermitteln und ein entsprechendes olfaktorisches Signal SO an der Einheit zum Überwachen des Gesundheitsstatus 200 bereitstellen, die vorzugsweise dazu ausgebildet ist, dieses auszuwerten. Auf diese Weise können Leckagen an dem Bremssystem 4 erkannt werden, wenn der Druckluft entsprechende Duftstoffe 301 oder Botenstoffe 302 beigemischt werden.

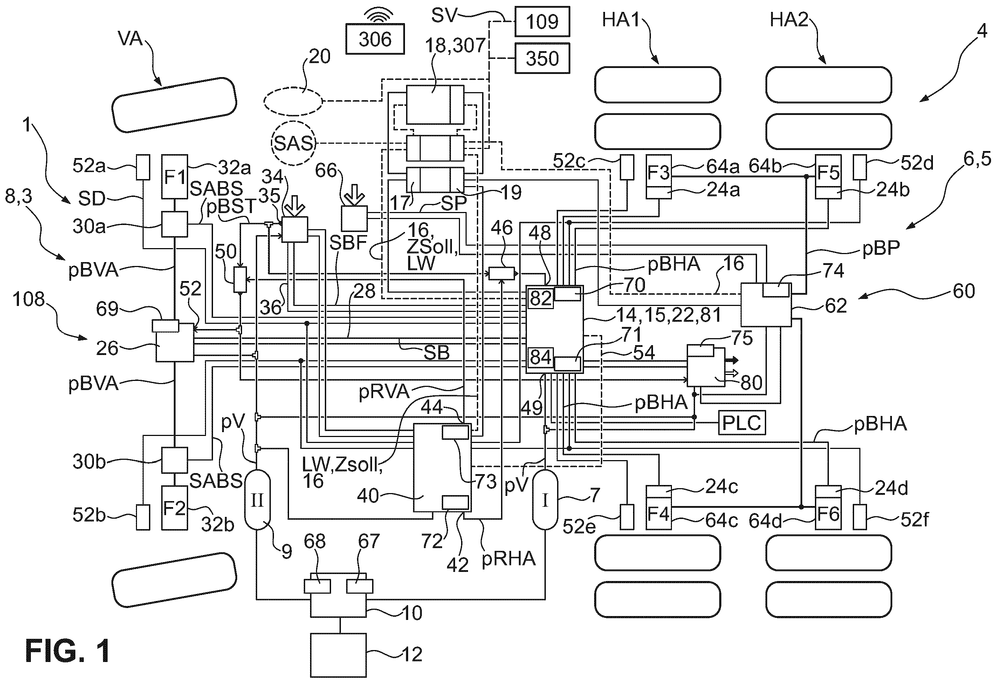

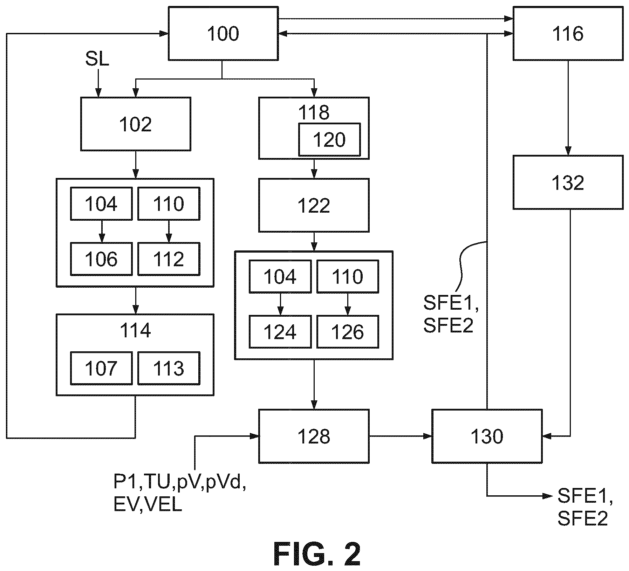

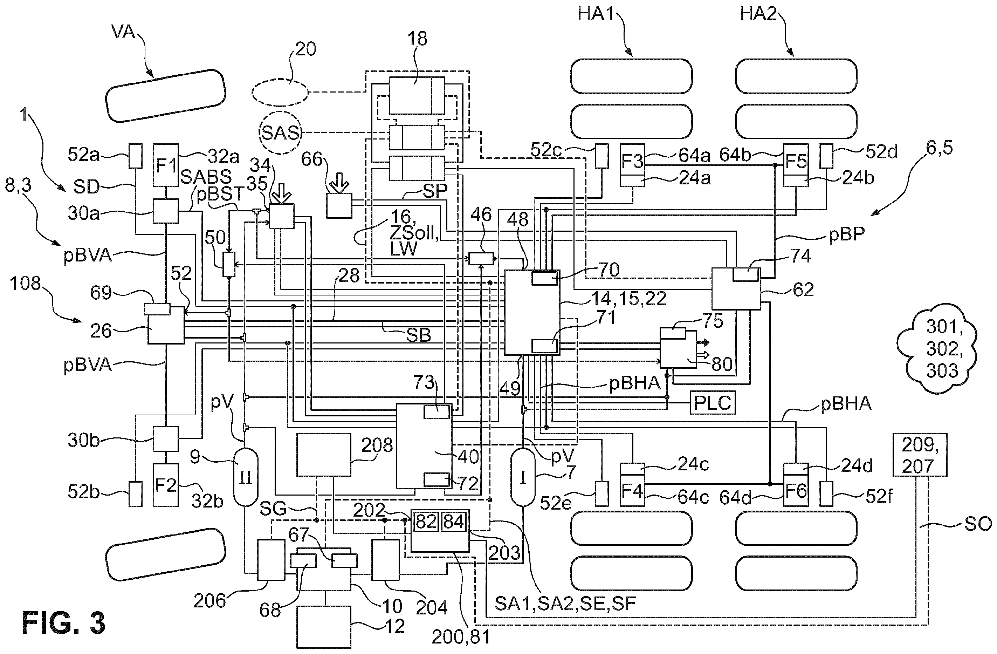

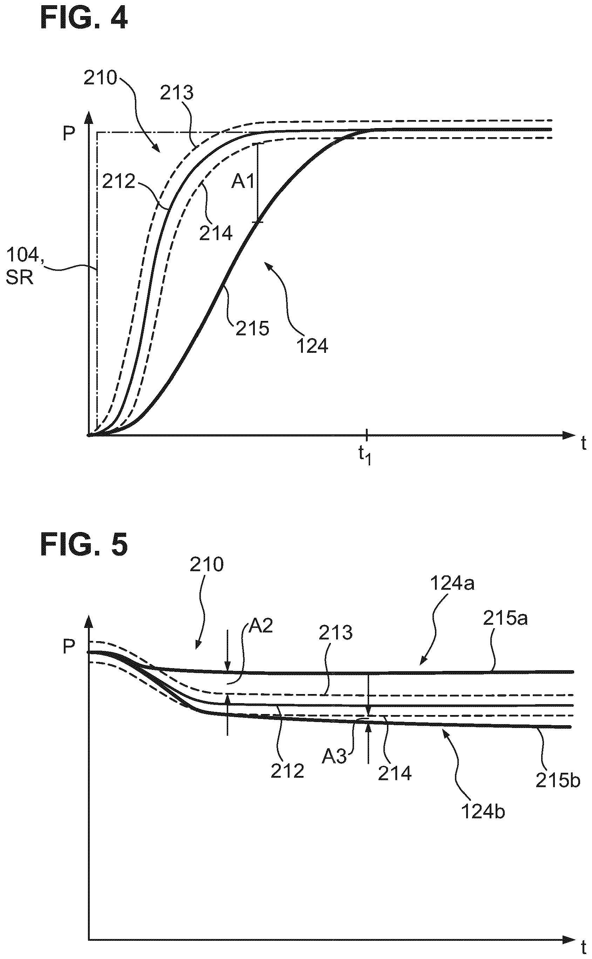

Die Figuren 4 und 5 illustrieren beispielhaft, wie der Vergleich 128 einer Soll-Systemreaktion und einer Diagnose-Systemreaktion ausgebildet sein kann. Beide Diagramme sind Druck-Zeit-Diagramme, mit dem Druck auf der Ordinate und der Zeit auf der Abszisse angetragen. Beide Diagramme der Figuren 4 und 5 können typisch sein für ein Diagramm, das mittels des dritten Drucksensors 69 aufgezeichnet wird. Eine Soll-Systemreaktion 210 wird hier durch einen Soll-Druckverlauf 212 gebildet, der umgeben ist von einem oberen Grenzwert 213 und einem unteren Grenzwert 214. Der Soll-Druckverlauf 212 wurde beispielsweise im Lernmodus 102 durch den dritten Drucksensor 69 in Antwort auf die erste Aktivität 104, beispielsweise in Form eines Sprungsignals SR, aufgezeichnet, der obere und untere Grenzwert 213, 214 vorgegeben oder errechnet, beispielsweise durch Vergleichereinheit 84. Zudem ist in Figur 4 eine Diagnose-Systemreaktion 124 eingezeichnet, die hier als ein Diagnose-Druckverlauf 215 dargestellt ist. Wie aus Figur 4 zu sehen, steigt der Druck des Diagnose-Druckverlaufs 215 deutlich langsamer an als der des Soll-Druckverlaufs 212, erreicht erst zum Zeitpunkt t1 tatsächlich den Soll-Druckverlauf 212. Es ergibt sich zu einem bestimmten Zeitpunkt eine erste Abweichung A1, die hier zeitlich veränderlich ist. Dies spricht für einen Nennweitenverengung im Vorratspfad oder einen Fehler im Hauptventil, beispielsweise dem Relaisventil des Vorderachsbremsdruckventils 26. Der zu langsam ansteigende Druckverlauf des Diagnose-Druckverlaufs 215 spricht dafür, dass nicht ausreichend Volumen bereitgestellt ist, um den stark ansteigenden Druckverlauf des Soll-Druckverlaufs 212 zu erreichen.

In dem zweiten Diagramm in Figur 5 ist wiederum eine Soll-Systemreaktion 210 eingezeichnet, wiederum durch einen Soll-Druckverlauf 212, sowie einen oberen Grenzwert 213 und einen unteren Grenzwert 214. In dem Diagramm in Figur 5 sind zwei Diagnose-Systemreaktionen 124a, 124b eingezeichnet. Die Diagnose-Systemreaktion 124a kann beispielsweise zu einem anderen Zeitpunkt erfasst worden sein als die Diagnose-Systemreaktion 124b, beispielsweise in zwei aufeinanderfolgenden Zyklen. Die Diagnose-Systemreaktion 124a mit dem Diagnose-Druckverlauf 215a zeigt einen zu geringen Luftverbrauch. Es ergibt sich eine zweite Abweichung A2. Ein möglicher Fehler könnte hier beispielsweise im Arbeitspfad des Bremszylinders liegen. Der gemessene Druck wird beispielsweise von dem ersten oder zweiten Drucksensor 67, 68 erfasst, die einen Druckabfall dann erfassen sollten, wenn Druckluft verbraucht wird, nämlich insbesondere bei einer Bremsaktion.

Die Diagnose-Systemreaktion 124b mit dem Diagnose-Druckverlauf 215b zeigt zunächst einen Verlauf, der sehr nah an dem Soll-Druckverlauf 212 liegt, dann aber stärker abfällt und insbesondere nicht konstant ist. Er fällt über die Zeit weiter ab. Eine dritte Abweichung A3 ist auch hier zeitlich veränderlich. Dies spricht für eine ungewollte Leckage, da auch im Zustand, wenn der Soll-Druckverlauf 212 statisch ist, der Druck weiter abfällt.

Sobald der Diagnose-Druckverlauf 215 nicht mehr zwischen oberem und unterem Grenzwert 213, 214 liegt, kann ein Fehlersignal ausgegeben werden, welches dann beispielsweise zur Folge haben kann, dass der automatisierte Betrieb und somit der autonome Modus 116 eingeschränkt werden.

### BEZUGSZEICHENLISTE (TEIL DER BESCHREIBUNG)

- 1: elektronisch steuerbares pneumatisches Bremssystem
- 2: Diagnoseverfahren
- 3: erstes Teilsystem
- 4: Nutzfahrzeug
- 5: zweites Teilsystem
- 6: erster Bremskreis
- 7: erster Druckluftvorrat
- 8: zweiter Bremskreis
- 9: zweiter Druckluftvorrat
- 10: Luftaufbereitungseinheit
- 12: Kompressor
- 14: zentrale Steuereinheit
- 15: kombiniertes Zentralmodul
- 16: Fahrzeug-BUS
- 17: erste Spannungsquelle
- 18: Einheit für autonomes Fahren
- 19: zweite Spannungsquelle
- 20: aktive Lenkung
- 22: Hinterachsbremsdruckventil
- 24a-24d: Hinterachsbremsaktuatoren
- 26: Vorderachsbremsdruckventil
- 28: erste Bremssignalleitung
- 30a, 30b: ABS-Ventile
- 32a, 32b: Vorderachsbremsaktuatoren
- 34: Bremswertgeber
- 35: pneumatischer Anschluss Bremswertgeber
- 36: erste Bremswertgeberleitung
- 40: sekundäre zentrale Steuereinheit
- 42: Hinterachsredundanzdruckausgang
- 44: Vorderachsredundanzdruckausgang
- 46: erstes Wechselventil
- 48: Redundanzdruckanschluss der zentralen Steuereinheit
- 49: Vorratsanschluss der zentralen Steuereinheit
- 50: zweites Wechselventil
- 52a-52f: Raddrehzahlsensoren
- 54: zweiter BUS
- 60: Parkbremssystem
- 62: Parkbremseinheit
- 64a-64d: Feststellbremsaktuatoren
- 66: Parkbremsschalter
- 67: erster Drucksensor
- 68: zweiter Drucksensor
- 69: dritter Drucksensor
- 70: vierter Drucksensor
- 71: fünfter Drucksensor
- 72: sechster Drucksensor
- 73: siebter Drucksensor
- 74: achter Drucksensor
- 75: neunter Drucksensor
- 80: Anhängersteuerventil
- 81: Diagnose-Steuereinheit
- 82: Speichereinheit
- 84: Vergleichereinheit
- 100: Standby des Nutzfahrzeugs / Bremssystems
- 102: Lernmodus
- 103: erste Systemdiagnose
- 104: erste vorbestimmte Aktivität
- 105: zweite Systemdiagnose
- 106: erste Lern-Systemreaktion
- 108: Sensoranordnung
- 109: Verzögerungssensor
- 110: zweite vorbestimmte Aktivität
- 112: zweite Lern-Systemreaktion
- 114: Speichern
- 116: autonomer Modus
- 118: Diagnosemodus
- 120: Abfahrtkontroller
- 122: Gesundheitscheck
- 124: erste Diagnose-Systemreaktion
- 126: zweite Diagnose-Systemreaktion
- 128: Vergleichen
- 130: Entscheidungsschritt
- 132: Diagnoseschritte (zyklisch)
- 200: Einheit zum Überwachen des Gesundheitsstatus
- 202: Spannungsanschluss der Einheit zum Überwachen des Gesundheitsstatus
- 203: BUS-Anschluss
- 204: erster Durchflusssensor
- 206: zweiter Durchflusssensor
- 207: Gassensor
- 208: Geräuschsensor
- 209: Einheit zur olfaktorischen Sensierung
- 210: Soll-Systemreaktion
- 212: Soll-Druckverlauf
- 213: oberer Grenzwert
- 214: unterer Grenzwert
- 215: Diagnose-Druckverlauf
- 301: Duftstoff
- 302: Botenstoff
- 303: Gas
- 305: Sicherheitsfahrer
- 306: externer Operator
- 307: übergeordnete Automatisierungseinheit
- A1: erste Abweichung
- A2: zweite Abweichung
- A3: dritte Abweichung
- EV: elektrisches Versorgungsspannungsniveau
- LW: Lenksignale
- HA1: erste Hinterachse
- HA2: zweite Hinterachse
- P1: erster Parameter
- pBHA: Hinterachsbremsdruck
- pBP: Parkbremsdruck
- pBST: Bremswertgeberdruck
- pBVA: Vorderachsbremsdruck
- pRHA: Hinterachsredundanzdruck
- pRVA: Vorderachsredundanzdruck
- pV: Vorratsdruck
- pV1: statischer Vorratsdruck
- pVd: dynamischer Vorratsdruck
- SA1: erstes Aktivitätssignal
- SA2: zweites Aktivitätssignal
- SABS: ABS-Signale
- SB: Bremssignale
- SBF: Fußbremssignale
- SD: Raddrehzahlsignale
- SE: Einschränkungssignal
- SF: Freigabesignal
- SL: Lernsignal
- SO: olfaktorisches Signal
- SP: Parkbremssignale
- SR: Sprungsignal
- TU: Umgebungstemperatur
- VA: Vorderachse
- VEL: elektrischer Stromverbrauch
- ZSoll: Bremsanforderungssignal

## Patentansprüche

1. Diagnoseverfahren (2) zum Durchführen einer Eigendiagnose eines elektronisch steuerbaren pneumatischen Bremssystems (1) für ein Nutzfahrzeug (4), umfassend die Schritte:
- Empfangen eines Lernsignals (SL) an dem Bremssystem (1);
- In Antwort auf den Empfang, Versetzen des Bremssystems (1) in einen Lernmodus (102) und Ausführen der Schritte:
- Ausführen einer vorbestimmten ersten Aktivität (104) des Bremssystems (1) bei stehendem oder fahrenden Nutzfahrzeug (4);
- Erfassen mittels einer Sensoranordnung (108) einer ersten Lern-Systemreaktion (106) des Bremssystems (1) in Antwort auf das Ausführen der ersten Aktivität (104); und
- Speichern (114) der erfassten ersten Lern-Systemreaktion (106) als erste Soll-Systemreaktion (107, 210) in einer Speichereinheit (82),
**gekennzeichnet durch** die Schritte:
- Durchführen einer ersten Systemdiagnose (103) mit den Schritten:
- Ausführen der vorbestimmten ersten Aktivität (104) des Bremssystems (1) bei stehendem oder fahrenden Nutzfahrzeug (4);
- Erfassen mittels der Sensoranordnung (108) einer ersten Diagnose-Systemreaktion (124) des Bremssystems (1) in Antwort auf das Ausführen der ersten Aktivität (104);
- Vergleichen (128) der ersten Diagnose-Systemreaktion (124) in einer Vergleichereinheit (84) mit der vorgespeicherten ersten Soll-Systemreaktion (107); und
- bei einer Abweichung (A1, A2, A3) zwischen der ersten Soll-Systemreaktion (107) und der ersten Diagnose-Systemreaktion (124): Ausgeben eines ersten Fehlersignals (SFE1).

2. Diagnoseverfahren nach Anspruch 1, wobei das Ausgeben des ersten Fehlersignals (SFE1) umfasst: Wenigstens teilweises Verhindern eines automatisierten Betriebs (116) des Nutzfahrzeugs (4).

3. Diagnoseverfahren nach einem der vorstehenden Ansprüche, wobei die vorbestimmte erste Aktivität (104) nur ein erstes Teilsystem (3) des Bremssystems (1) betrifft.

4. Diagnoseverfahren nach einem der vorstehenden Ansprüche, umfassend in dem Lernmodus (102) die Schritte:
- Ausführen einer vorbestimmten zweiten Aktivität (110) des Bremssystems (1) bei stehendem oder fahrenden Nutzfahrzeug (4);
- Erfassen mittels einer weiteren oder der Sensoranordnung (108) einer zweiten Lern-Systemreaktion (112) des Bremssystems (1) in Antwort auf das Ausführen der zweiten Aktivität (110); und
- Speichern (114) der erfassten zweiten Lern-Systemreaktion (112) als zweite Soll-Systemreaktion (213) in einer weiteren oder der Speichereinheit (82).

5. Diagnoseverfahren nach Anspruch 4, umfassend die Schritte:
- Durchführen einer zweiten Systemdiagnose (105) mit den Schritten:
- Ausführen der vorbestimmten zweiten Aktivität (110) des Bremssystems (1) bei stehendem oder fahrenden Nutzfahrzeug (4);
- Erfassen mittels der oder der weiteren Sensoranordnung (108) einer zweiten Diagnose-Systemreaktion (126) des Bremssystems (1) in Antwort auf das Ausführen der zweiten Aktivität (110);
- Vergleichen (128) der zweiten Diagnose-Systemreaktion (126) in einer weiteren oder der Vergleichereinheit (84) mit der vorgespeicherten zweiten Soll-Systemreaktion (113); und
- bei einer Abweichung (A1, A2, A3) zwischen der zweiten Soll-Systemreaktion (113) und der zweiten Diagnose-Systemreaktion (126): Ausgeben eines zweiten Fehlersignals (SFE2).

6. Diagnoseverfahren nach einem der vorstehenden Ansprüche 4 oder 5, wobei die vorbestimmte zweite Aktivität (110) nur ein zweites Teilsystem (5) des Bremssystems (1) betrifft.

7. Diagnoseverfahren nach Anspruch 1 oder 5, wobei der Schritt des Vergleichens in der Vergleichereinheit (84) unter Berücksichtigung wenigstens eines Parameters (P1) ausgeführt wird, der ausgewählt ist aus: Umgebungstemperatur (UT), Vorratsdruck (pV), insbesondere statischer Vorratsdruck (pV1) vor Beginn des Diagnoseverfahrens (2) oder dynamischer Vorratsdruckverlauf (pVd) während des Diagnoseverfahrens (2), elektrisches Versorgungsspannungsniveau (EV) in dem Bremssystem (1) oder einem oder mehreren Teilen (3, 5, 6, 8) von diesem, elektrischer Stromverbrauch (VEL)in dem Bremssystem (1) oder einem oder mehreren Teilen (3, 5, 6, 8) des Bremssystem (1).

8. Diagnoseverfahren nach einem der vorstehenden Ansprüche, wobei die vorbestimmte erste Aktivität (104) ein Sprungsignal (SR) an einem Bremskraftmodulator (26, 22, 62, 80) umfasst.

9. Diagnoseverfahren nach einem der vorstehenden Ansprüche, wobei die Sensoranordnung (108) wenigstens einen Drucksensor (67, 68, 69, 70, 71, 72, 73, 74, 75) umfasst.

10. Diagnoseverfahren nach Anspruch 9, wobei die Sensoranordnung (108) eine Messeinheit (204, 206) zur Erfassung eines Volumen- oder Massenstroms und/oder einen Geräuschsensor (208) umfasst.

11. Diagnoseverfahren nach Anspruch 9 oder 10, wobei die Sensoranordnung (108) eine Einheit zur olfaktorischen Sensierung (209) und/oder Gassensor (207)zur Erfassung eines Duftstoffs (301), Botenstoffs (302) und/oder Gases (303)umfasst.

12. Diagnoseverfahren nach einem der vorstehenden Ansprüche, wobei die vorbestimmte erste Aktivität (104) eine Betätigung einer oder mehrerer Reibbremsen (32a, 32b, 64a-64d) mittels Aussteuerung eines Bremsdrucks (pBVA, pBHA) an einer oder mehrerer Achsen (VA, HA1, HA2) Nutzfahrzeugs (4) mit einer vorbestimmten Bremskraft (F1, F2, F3, F4, F5, F6) bei fahrendem Nutzfahrzeug (4) umfasst.

13. Diagnoseverfahren nach Anspruch 12, wobei die Sensoreinheit (108) einen Verzögerungssensor (109) umfasst zum Ermitteln einer Verzögerung (SV) des Nutzfahrzeugs (4).

14. Diagnoseverfahren nach Anspruch 1 oder 5, wobei das erste Fehlersignal (SFE1) bzw. das zweite Fehlersignal (SFE2) an einen Sicherheitsfahrer (305), einen externen Operator (306) und/oder ein übergeordnetes Automatisierungssystem (307) ausgegeben wird.

15. Diagnoseverfahren nach Anspruch 1 oder 5, wobei in Antwort auf das erste Fehlersignal (SFE1) und/oder zweite Fehlersignal (SFE2) ein Fahrer des Nutzfahrzeugs (4) aufgefordert wird, einen automatisierten Betrieb (116) des Nutzfahrzeugs (4) freizugeben.

16. Elektronisch steuerbares pneumatisches Bremssystem (1) für ein Nutzfahrzeug (4), mit
- einem ersten Bremskreis (6), der von einem ersten Druckluftvorrat (7) versorgt wird,
- einem zweiten Bremskreis (8), der von einem zweiten Druckluftvorrat (9) versorgt wird,
- wenigsten einem Vorderachsbremsdruckventil (26) zum Aussteuern eines Vorderachsbremsdrucks (pBVA) an einer Vorderachse (VA) des Nutzfahrzeugs (4);
- wenigsten einem Hinterachsbremsdruckventil (22) zum Aussteuern eines Hinterachsbremsdrucks (pBHA) an wenigstens einer Hinterachse (HA1, HA2) des Nutzfahrzeugs (4);
- einer zentralen Steuereinheit (14) zum Steuern des Bremssystems (1); und
- einer Diagnose-Steuereinheit (81), die geeignet ist, das Diagnoseverfahren (2) nach einem der Ansprüche 1 bis 15 auszuführen.

17. Elektronisch steuerbares pneumatisches Bremssystem (1) nach Anspruch 16, wobei die Diagnose-Steuereinheit (81) teil der zentralen Steuereinheit (14) oder mit dieser zu einem Modul (15) integriert ist.

18. Elektronisch steuerbares pneumatisches Bremssystem (1) nach Anspruch 16, wobei die Diagnose-Steuereinheit (81) als eigenständiges Modul (200) mit einem Spannungsanschluss (202) und einem Anschluss (203) für ein BUS-System (16) ausgebildet ist.

19. Computerprogramm, umfassend Befehle, die bewirken, dass das Bremssystem (1) des Anspruchs 16 die Verfahrensschritte des Diagnoseverfahrens (2) nach Anspruch 1 ausführt.

## Claims

1. Diagnostic method (2) for performing a self-diagnosis of an electronically controllable pneumatic brake system (1) for a commercial vehicle (4), comprising the steps of:
- receiving a learning signal (SL) at the brake system (1);
- in response to receiving said signal, putting the brake system (1) into a learning mode (102) and carrying out the steps of:
- carrying out a predetermined first activity (104) of the brake system (1) with the commercial vehicle (4) stationary or moving;
- detecting, by means of a sensor arrangement (108), a first learning system response (106) of the brake system (1) in response to carrying out the first activity (104); and
- storing (114) the detected first learning system response (106) in a memory unit (82) as a first target system response (107, 210),
**characterized by** the steps of:
- performing a first system diagnosis (103) having the steps of:
- carrying out the predetermined first activity (104) of the brake system (1) with the commercial vehicle (4) stationary or moving;
- detecting, by means of the sensor arrangement (108), a first diagnostic system response (124) of the brake system (1) in response to carrying out the first activity (104);
- comparing (128) the first diagnostic system response (124) in a comparator unit (84) against the pre-stored first target system response (107); and
- if there is a deviation (A1, A2, A3) between the first target system response (107) and the first diagnostic system response (124): outputting a first fault signal (SFE1).

2. Diagnostic method according to claim 1, wherein outputting the first fault signal (SFE1) comprises: at least partially preventing automated operation (116) of the commercial vehicle (4).

3. Diagnostic method according to either of the preceding claims, wherein the predetermined first activity (104) relates only to a first subsystem (3) of the brake system (1).

4. Diagnostic method according to any of the preceding claims, comprising, in the learning mode (102), the steps of:
- carrying out a predetermined second activity (110) of the brake system (1) with the commercial vehicle (4) stationary or moving;
- detecting, by means of a further or the sensor arrangement (108), a second learning system response (112) of the brake system (1) in response to carrying out the second activity (110); and
- storing (114) the detected second learning system response (112) in a further or the memory unit (82) as a second target system response (213).

5. Diagnostic method according to claim 4, comprising the steps of:
- performing a second system diagnosis (105) having the steps of:
- carrying out the predetermined second activity (110) of the brake system (1) with the commercial vehicle (4) stationary or moving;
- detecting, by means of the or the further sensor arrangement (108), a second diagnostic system response (126) of the brake system (1) in response to carrying out the second activity (110);
- comparing (128) the second diagnostic system response (126) in a further or the comparator unit (84) against the pre-stored second target system response (113); and
- if there is a deviation (A1, A2, A3) between the second target system response (113) and the second diagnostic system response (126): outputting a second fault signal (SFE2).

6. Diagnostic method according to either of the preceding claims 4 and 5, wherein the predetermined second activity (110) relates only to a second subsystem (5) of the brake system (1).

7. Diagnostic method according to claim 1 or 5, wherein the step of comparing in the comparator unit (84) is carried out taking into account at least one parameter (P1) selected from: an ambient temperature (UT), a supply pressure (pV), in particular a static supply pressure (pV1) before the start of the diagnostic method (2) or a dynamic supply pressure profile (pVd) during the diagnostic method (2), an electrical supply voltage level (EV) in the brake system (1) or one or more parts (3, 5, 6, 8) thereof, and an electrical current consumption (VEL) in the brake system (1) or one or more parts (3, 5, 6, 8) of the brake system (1).

8. Diagnostic method according to any of the preceding claims, wherein the predetermined first activity (104) comprises a square-wave signal (SR) at a brake force modulator (26, 22, 62, 80).

9. Diagnostic method according to any of the preceding claims, wherein the sensor arrangement (108) comprises at least one pressure sensor (67, 68, 69, 70, 71, 72, 73, 74, 75).

10. Diagnostic method according to claim 9, wherein the sensor arrangement (108) comprises a measuring unit (204, 206) for detecting a volume flow or mass flow, and/or a noise sensor (208).

11. Diagnostic method according to claim 9 or 10, wherein the sensor arrangement (108) comprises an olfactory sensing unit (209) and/or a gas sensor (207) for detecting an odorant (301), messenger substance (302) and/or gas (303).

12. Diagnostic method according to any of the preceding claims, wherein the predetermined first activity (104) comprises actuating one or more friction brakes (32a, 32b, 64a-64d) by modulating a brake pressure (pBVA, pBHA) at one or more axles (VA, HA1, HA2) of the commercial vehicle (4) using a predetermined brake force (F1, F2, F3, F4, F5, F6) with the commercial vehicle (4) moving.

13. Diagnostic method according to claim 12, wherein the sensor unit (108) comprises a deceleration sensor (109) for determining a deceleration (SV) of the commercial vehicle (4).

14. Diagnostic method according to claim 1 or 5, wherein the first fault signal (SFE1) or the second fault signal (SFE2) is output to a safety driver (305), an external operator (306) and/or a superordinate automation system (307).

15. Diagnostic method according to claim 1 or 5, wherein in response to the first fault signal (SFE1) and/or second fault signal (SFE2) a driver of the commercial vehicle (4) is requested to enable automated operation (116) of the commercial vehicle (4).

16. Electronically controllable pneumatic brake system (1) for a commercial vehicle (4), having
- a first brake circuit (6) supplied by a first compressed-air supply (7),
- a second brake circuit (8) supplied by a second compressed-air supply (9),
- at least one front axle brake pressure valve (26) for modulating a front axle brake pressure (pBVA) at a front axle (VA) of the commercial vehicle (4);
- at least one rear axle brake pressure valve (22) for modulating a rear axle brake pressure (pBHA) at at least one rear axle (HA1, HA2) of the commercial vehicle (4);
- a central control unit (14) for controlling the brake system (1); and
- a diagnostic control unit (81) suitable for carrying out the diagnostic method (2) according to any of claims 1 to 15.

17. Electronically controllable pneumatic brake system (1) according to claim 16, wherein the diagnostic control unit (81) is part of the central control unit (14) or is integrated therewith to form a module (15).

18. Electronically controllable pneumatic brake system (1) according to claim 16, wherein the diagnostic control unit (81) is designed as an independent module (200) having a voltage connection (202) and a connection (203) for a BUS system (16).

19. Computer program comprising instructions that cause the brake system (1) according to claim 16 to carry out the method steps of the diagnostic method (2) according to claim 1.

## Revendications

1. Procédé de diagnostic (2) pour la réalisation d'un autodiagnostic d'un système de freinage (1) pneumatique pouvant être commandé électroniquement pour un véhicule utilitaire (4), comprenant les étapes consistant à :
- recevoir un signal d'apprentissage (SL) au niveau du système de freinage (1) ;
- en réponse à la réception, placer le système de freinage (1) dans un mode d'apprentissage (102) et exécuter les étapes consistant à :
- exécuter une première activité (104) prédéterminée du système de freinage (1) lorsque le véhicule utilitaire (4) est à l'arrêt ou en marche ;
- détecter, au moyen d'un agencement de capteurs (108), une première réponse de système d'apprentissage (106) du système de freinage (1) en réponse à l'exécution de la première activité (104) ; et
- enregistrer (114) la première réponse de système d'apprentissage (106) détectée en tant que première réponse de système de consigne (107, 210) dans une unité d'enregistrement (82), **caractérisé par** les étapes consistant à :
- effectuer un premier diagnostic de système (103) comportant les étapes consistant à :
- exécuter la première activité (104) prédéterminée du système de freinage (1) lorsque le véhicule utilitaire (4) est à l'arrêt ou en marche ;
- détecter, au moyen de l'agencement de capteurs (108), une première réponse de système de diagnostic (124) du système de freinage (1) en réponse à l'exécution de la première activité (104) ;
- comparer (128) la première réponse de système de diagnostic (124) dans une unité de comparaison (84) avec la première réponse de système de consigne (107) préenregistrée ; et
- en cas d'écart (A1, A2, A3) entre la première réponse de système de consigne (107) et la première réponse de système de diagnostic (124) : émettre un premier signal d'erreur (SFE1).

2. Procédé de diagnostic selon la revendication 1, dans lequel l'émission du premier signal d'erreur (SFE1) comprend : le fait d'empêcher au moins partiellement un fonctionnement automatisé (116) du véhicule utilitaire (4).

3. Procédé de diagnostic selon l'une des revendications précédentes, dans lequel la première activité (104) prédéterminée ne concerne qu'un premier sous-système (3) du système de freinage (1).

4. Procédé de diagnostic selon l'une des revendications précédentes, comprenant, dans le mode d'apprentissage (102), les étapes consistant à :
- exécuter une seconde activité (110) prédéterminée du système de freinage (1) lorsque le véhicule utilitaire (4) est à l'arrêt ou en marche ;
- détecter, au moyen d'un autre agencement de capteurs ou de l'agencement de capteurs (108), une seconde réponse de système d'apprentissage (112) du système de freinage (1) en réponse à l'exécution de la seconde activité (110) ; et
- enregistrer (114) la seconde réponse de système d'apprentissage (112) détectée en tant que seconde réponse de système de consigne (213) dans une autre unité d'enregistrement ou dans l'unité d'enregistrement (82).

5. Procédé de diagnostic selon la revendication 4, comprenant les étapes consistant à :
- effectuer un second diagnostic de système (105) comportant les étapes consistant à :
- exécuter la seconde activité (110) prédéterminée du système de freinage (1) lorsque le véhicule utilitaire (4) est à l'arrêt ou en marche ;
- détecter, au moyen de l'agencement de capteurs ou de l'autre agencement de capteurs (108), une seconde réponse de système de diagnostic (126) du système de freinage (1) en réponse à l'exécution de la seconde activité (110) ;
- comparer (128) la seconde réponse de système de diagnostic (126) dans une autre unité de comparaison ou dans l'unité de comparaison (84) avec la seconde réponse de système de consigne (113) préenregistrée ; et
- en cas d'écart (A1, A2, A3) entre la seconde réponse de système de consigne (113) et la seconde réponse de système de diagnostic (126) : émettre un second signal d'erreur (SFE2).

6. Procédé de diagnostic selon l'une des revendications 4 ou 5 précédentes, dans lequel la seconde activité (110) prédéterminée ne concerne qu'un second sous-système (5) du système de freinage (1).

7. Procédé de diagnostic selon la revendication 1 ou 5, dans lequel l'étape de comparaison est exécutée dans l'unité de comparaison (84) en tenant compte d'au moins un paramètre (P1) choisi parmi : température ambiante (UT), pression de réserve (pV), en particulier pression de réserve statique (pV1) avant le début du procédé de diagnostic (2) ou évolution dynamique de la pression de réserve (pVd) pendant le procédé de diagnostic (2), niveau de tension d'alimentation électrique (EV) dans le système de freinage (1) ou dans une ou plusieurs parties (3, 5, 6, 8) de celui-ci, consommation de courant électrique (VEL) dans le système de freinage (1) ou dans une ou plusieurs parties (3, 5, 6, 8) du système de freinage (1).

8. Procédé de diagnostic selon l'une des revendications précédentes, dans lequel la première activité (104) prédéterminée comprend un signal de saut (SR) sur un modulateur de force de freinage (26, 22, 62, 80).

9. Procédé de diagnostic selon l'une des revendications précédentes, dans lequel l'agencement de capteurs (108) comprend au moins un capteur de pression (67, 68, 69, 70, 71, 72, 73, 74, 75).

10. Procédé de diagnostic selon la revendication 9, dans lequel l'agencement de capteurs (108) comprend une unité de mesure (204, 206) pour la détection d'un débit volumique ou massique et/ou un capteur de bruit (208).

11. Procédé de diagnostic selon la revendication 9 ou 10, dans lequel l'agencement de capteurs (108) comprend une unité pour la détection olfactive (209) et/ou un capteur de gaz (207) pour la détection d'une substance odorante (301), d'un transmetteur chimique (302) et/ou d'un gaz (303).

12. Procédé de diagnostic selon l'une des revendications précédentes, dans lequel la première activité (104) prédéterminée comprend un actionnement d'un ou de plusieurs freins à friction (32a, 32b, 64a-64d) au moyen d'une commande d'une pression de freinage (pBVA, pBHA) au niveau d'un ou de plusieurs essieux (VA, HA1, HA2) du véhicule utilitaire (4) avec une force de freinage (F1, F2, F3, F4, F5, F6) prédéterminée lorsque le véhicule utilitaire (4) est en marche.

13. Procédé de diagnostic selon la revendication 12, dans lequel l'unité à capteurs (108) comprend un capteur de décélération (109) pour la détermination d'une décélération (SV) du véhicule utilitaire (4).

14. Procédé de diagnostic selon la revendication 1 ou 5, dans lequel le premier signal d'erreur (SFE1) ou le second signal d'erreur (SFE2) est émis vers un conducteur de sécurité (305), un opérateur externe (306) et/ou un système d'automatisation supérieur (307).

15. Procédé de diagnostic selon la revendication 1 ou 5, dans lequel, en réponse au premier signal d'erreur (SFE1) et/ou au second signal d'erreur (SFE2), un conducteur du véhicule utilitaire (4) est invité à valider un fonctionnement automatisé (116) du véhicule utilitaire (4).

16. Système de freinage (1) pneumatique pouvant être commandé électroniquement pour un véhicule utilitaire (4), comportant
- un premier circuit de freinage (6) alimenté par une première réserve d'air comprimé (7), - un second circuit de freinage (8) alimenté par une seconde réserve d'air comprimé (9),
- au moins une soupape de pression de freinage d'essieu avant (26) pour la commande d'une pression de freinage d'essieu avant (pBVA) au niveau d'un essieu avant (VA) du véhicule utilitaire (4) ;
- au moins une soupape de pression de freinage d'essieu arrière (22) pour la commande d'une pression de freinage d'essieu arrière (pBHA) au niveau d'au moins un essieu arrière (HA1, HA2) du véhicule utilitaire (4) ;
- une unité de commande centrale (14) pour la commande du système de freinage (1) ; et
- une unité de commande de diagnostic (81) qui est adaptée pour exécuter le procédé de diagnostic (2) selon l'une des revendications 1 à 15.

17. Système de freinage (1) pneumatique pouvant être commandé électroniquement selon la revendication 16, dans lequel l'unité de commande de diagnostic (81) fait partie de l'unité de commande centrale (14) ou est intégrée avec celle-ci pour former un module (15).

18. Système de freinage (1) pneumatique pouvant être commandé électroniquement selon la revendication 16, dans lequel l'unité de commande de diagnostic (81) est réalisée sous la forme d'un module autonome (200) comportant un raccordement de tension (202) et un raccordement (203) pour un système de BUS (16).

19. Programme informatique comprenant des instructions qui amènent le système de freinage (1) de la revendication 16 à exécuter les étapes de procédé du procédé de diagnostic (2) selon la revendication 1.
